# EUROPEAN PATENT SPECIFICATION

(11) **EP 3 553 753 B1**
(45) Date of publication and mention of the grant of the patent: **17.11.2021**
(21) Application number: 19163483.1
(22) Date of filing: 18.03.2019
(51) Int. Cl.: G09F 3/03

(54) **SYSTEM AND METHOD FOR MANAGING TACHOGRAPH SEALS**
SYSTEM UND VERFAHREN ZUR VERWALTUNG VON TACHOGRAPHENSIEGELN
SYSTÈME ET PROCÉDÉ DE GESTION DE SCEAUS DE TACHYGRAPHE

(30) Priority: 19.03.2018 SE 1850305
(43) Date of publication of application: 16.10.2019
(73) Proprietor: Stoneridge Electronics AB, 169 73 Solna (SE)
(72) Inventor: JOHANSSON, Mikael, 125 34 Älvsjö (SE); LOHAGE, Arne, 167 38 Bromma (SE)
(74) Representative: Bergenstråhle & Partners AB

(56) References cited:
- US-A1- 2008 042 842
- US-A1- 2014 316 685
- Anonymous: "The Approved Tachograph Centre manual", Driver & Vehicle Standards Agency, 11 November 2015 (2015-11-11), pages 1-99, XP055584446, Retrieved from the Internet: URL:https://assets.publishing.service.gov. uk/government/uploads/system/uploads/attac hment_data/file/475864/approved-tachograph -centre-manual.pdf [retrieved on 2019-04-30]
- Schreiner Group Gmbh & Co. Kg: "Goodbye to Tachograph Tampering - Schreiner Group", , 6 October 2015 (2015-10-06), pages 1-2, XP055810101, Retrieved from the Internet: URL:https://www.schreiner-group.com/en/pre ss/detail/goodbye-to-tachograph-tampering. html [retrieved on 2021-06-02]

## Description

### Technical field

The present invention relates generally to a system and method for managing tachograph seals, and more specifically managing information pertaining to such seals.

### Background art

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g. dangerous goods, livestock or refrigerated food etc. Therefore, most vehicles, such as lorry trucks, carry a vehicle unit to measure, store and possible also report the collected data. In this document, the term "vehicle unit" shall mean a digital unit capable of gathering information relating to the vehicle. Examples of such information may be a geographical location, driving hours, distance travelled, start time, finish time, rest time, driver name, starting location and finishing location, exhaust measurements, fuel consumption, temperature data from vehicle or cargo sensors, opening and closing of cargo doors or operation of other vehicle systems, e.g. cranes and lifts etc. One example of a vehicle unit is a digital tachograph, capable of recording and digitally compiling and storing the vehicle data.

The vehicle unit is normally located in the cabin of the vehicle, where the vehicle unit is arranged in the instrument board, so that the vehicle operator may operate the vehicle unit in adjacency to start or stop of a journey. In order to calculate and estimate the speed and the travel distance, or other parameters for instance as listed above, of the vehicle, the vehicle unit is connected to one or more sensors, where the sensors are capable of measuring, for instance, the motion of the wheels or other parameters. For this purpose, a motion sensor is attached to the gearbox of the vehicle to receive pulses, i.e. speed and movement information, which is sent to the tachograph.

The motion sensor and tachograph are subjects for tampering, and therefore a mechanical seal is used to prevent tampering and to visualise any attempts to manipulate the motion sensor. Enforcers check if the seal is broken or not. A broken seal is an indication that the motion sensor may have been manipulated or tampered with. However, known mechanical seals of today are relatively easy to refit or replace, since they usually comprise an embossed soft-metal seal which only requires a simple tool available in most workshops for clamping.

New legislation on tachographs (cf. Regulation (EU) 165/2014 and Commission Implementing Regulation (EU) 2016/799) stipulates that the connection between the motion sensor and the gearbox shall be sealed in such a way as to ensure that no manipulation device can tamper with or alter the data recorded. To this end, the seals shall fulfil a set of criteria, whereby they shall be marked with a unique seal identification number which includes the identity of the seal manufacturer. The identification numbers of the seals mounted shall be stored in the tachograph (up to five seals) as part of the calibration data and also printed on an installation plaque to be mounted on the B-pillar of the vehicle, and the seals shall be traceable (bi-directionally) from the seals manufacturers to seals mounted in vehicles. Moreover, certified seals manufacturers shall be registered in a dedicated database and shall make their seal identification numbers public, maintain full traceability records of the seals, and shall be prepared to produce them to competent national authorities whenever need be. In addition, approved fitters, workshops or vehicle manufacturers shall place a special mark on the seals which it affixes and, for digital tachographs, shall enter electronic security data for carrying out authentication checks. The special mark may comprise a unique identifier (UID) associated with the approved fitter, workshop or vehicle manufacturer. As a result, the procedure for mounting a seal now forms part of the calibration procedure of the tachograph as the seal identification number(s) and the UID of the approved fitter, workshop or vehicle manufacturer shall be both visible on the seal and printed on the installation plaque. In addition, the seal identification number(s) shall be stored in the tachograph.

Furthermore, the European standard EN 16882:2016 outlines requirements and test procedures regarding security of the mechanical seals used on tachographs in road vehicles. The seals shall among other features be designed for single use only and to show visual evidence of tampering or intrusion to the tachograph system.

The legislation places considerable responsibility on fitters, workshops, and vehicle manufacturers to properly handle seals and the information associated therewith. For instance, in the case of seals on stock, a fitter/workshop/vehicle manufacturer must verify that the seals on the shelf have correct identification numbers compared to an existing list in a local fitter/workshop/vehicle manufacturer database, that the seals are traceable to the seal manufacturer, and that the seals are traceable to a central database established by the European Commission.

Furthermore, when mounting valid seals in vehicles, the fitter/workshop/vehicle manufacturer must make sure that the vehicle identification number (VIN) is stored together with the seal identification number in the local workshop database, that all seal identification numbers are stored in tachograph memory (calibration data), and that all seal identification numbers are printed on the plaque.

Finally, when asked for traceability and validity check of seals, the fitter/workshop/vehicle manufacturer is required to retrieve the seal identification number, for example by a request from enforcer, to verify whether the seal is valid and to identify which workshop has mounted the seal by checking the seal identification number towards the central Commission database. "The Approved Tachograph Centre manual", published on November 11, 2015 by the UK Driver & Vehicle Standards Agency (DVSA) provides an overview of the requirements that set the standards for approval and must be adhered to at all times by Approved Tachograph Centres and their staff when conducting tachograph work.

Hence, an increasing number of tasks are required to be carried out by fitters/workshops/vehicle manufacturers to ensure that handling of the seals fulfil the legal requirements set out in Regulation (EU) 165/2014 and Commission Implementing Regulation (EU) 2016/799. The increased workload not only affects the time needed to perform the required tasks, but the human factor also carries a sizeable risk that wrong or insufficient information is entered into the database, which would prevent traceability at all subsequent stages of processing and retrieval of information associated with the individual seals.

US 2008/0042842 discloses an apparatus and method to monitor and track the security of bulk cargo from a dispatch point to a receipt point. The apparatus includes a plurality of RFID antennas at a dispatch location and at a receipt location, networked software modules in communication with the RFID antennas, and disposable RFID tags used as security seals affixed to a carrier at multiple locations.

Hence, there is a need to develop improved solutions for managing seals for tachographs in a fitter/workshop/vehicle manufacturer environment to ensure that correct information is input and stored in the appropriate places for future reference and retrieval, and thus facilitate mounting of tachograph seals in vehicles.

### Summary of invention

An object of the present invention is to provide improved solutions for managing seals for tachographs in a fitter/workshop/vehicle manufacturer environment to ensure that correct information is input and stored in the appropriate places for future reference and retrieval, and thus facilitate mounting of tachograph seals in vehicles. This object is achieved in a first aspect, by means of a system for managing seals for tachographs in vehicles, the system comprising: a tachograph comprising a motion sensor adapted to be connected to a gearbox of a vehicle, or an adaptor, to provide a signal representative of vehicle speed and/or distance travelled; at least one seal arranged for single use, and adapted to be fitted between the motion sensor and the gearbox, or between the adaptor and the vehicle, in such a way as to show visual evidence of tampering, wherein each seal is marked with a unique identification number and comprises a readable electronic tag containing data including the identification number stored thereon; a reader arranged to communicate wirelessly with the electronic tag of the seal to read the data stored thereon; and a database adapted to store data associated with each seal. The reader is further arranged to communicate wirelessly with the tachograph to provide the data read from the electronic tag to be stored in an internal memory of the tachograph, and communicate wirelessly with the database to provide the data read from the electronic tag to be stored in the database.

By providing a system wherein the relevant data associated with each seal may be read electronically and transmitted to relevant units such as the tachograph in the vehicle and a database for storage using wireless communication, the tasks of a fitter, workshop or vehicle manufacturer when fitting a seal in a vehicle are greatly facilitated and the handling of the necessary information is simplified in that the risks of errors being introduced are considerably reduced.

In a preferred embodiment, the data stored on the electronic tag and/or the data associated with each seal to be stored in the database comprises the seal identification number, a unique identifier (UID) associated with the fitter or workshop or vehicle manufacturer that may fit the seal in a vehicle, a status of the seal in the system, and/or a vehicle identification number (VIN) of the vehicle in which the seal is fitted.

In an advantageous embodiment, the status of the seal in the system is chosen from any of the values comprising 'in stock', 'fitted in vehicle', 'broken' and 'removed'. The status provides a quick indication of whether a seal identification number associated with a seal is valid and in the correct state and location.

In a further preferred embodiment, the electronic tag is an RFID tag, an NFC tag or any tag which enables wireless interrogation and reading of data from the electronic tag to the reader. Such tags provide proven, inexpensive technology suitable for integration in tachograph seals.

In an alternative embodiment, the electronic tag is arranged in a frangible portion of the seal such that the electronic tag is broken if the seal is broken. Advantageously, by breaking the electronic tag upon breaking of the seal, a subsequent failure to wirelessly read an electronic tag on a seal provides a quick indication that a seal is broken and may have been tampered with.

In a second aspect of the present invention, there is provided a method performed by a system according to the first aspect, wherein the method comprises the steps of:
- reading the information stored on the electronic tag in the seal by means of the reader; and
- wirelessly sending the data read from the electronic tag to the database, storing the data in the database, and updating a status of the seal in the system

In a preferred embodiment, the data stored on the electronic tag and/or the data associated with each seal to be stored in the database comprises the seal identification number, a unique identifier (UID) associated with the fitter or workshop or vehicle manufacturer that may fit the seal in a vehicle, a status of the seal in the system, and/or a vehicle identification number (VIN) of the vehicle in which the seal is fitted.

In an advantageous embodiment, the status of the seal in the system is recorded as any of the values chosen from 'in stock', 'fitted in vehicle', 'broken', and 'removed'.

In an alternative embodiment, the method further comprises the steps of:
- fitting the seal between the motion sensor and the gearbox in a vehicle, or between the adaptor and the vehicle, in such a way as to show visual evidence of any attempt to tamper with the seal;
- reading the information stored on the electronic tag in the seal by means of the reader;
- wirelessly sending the data read from the electronic tag to the tachograph and storing the data in an internal memory of the tachograph;
- wirelessly sending the data read from the electronic tag along with the vehicle identification number (VIN) of the vehicle and the unique identifier (UID) associated with the fitter or workshop or vehicle manufacturer that may fit the seal in a vehicle to the database, storing the data, the VIN and the UID in the database, and updating the status of the seal in the system to the value 'fitted in vehicle'.

In a further preferred embodiment, the method further comprises the steps of:
- sending the data read from the electronic tag, the VIN, and the UID to a printer; and
- printing an installation plaque comprising the seal identification number, the VIN and the UID to be affixed on the tachograph and/or the B pillar or doorframe of the vehicle.

In an advantageous embodiment, the method further comprises the steps of:
- detecting that a seal fitted between the motion sensor and the gearbox in a vehicle, or between the adaptor and the vehicle, shows visual evidence of an attempt to tamper with the seal;
- reading the information stored on the electronic tag in the seal by means of the reader; and
- wirelessly sending the data read from the electronic tag to the database, identifying the seal in the database, and updating the status of the seal in the system to the value 'broken'.

In an alternative embodiment, the method further comprises the steps of:
- removing a seal fitted between the motion sensor and the gearbox in a vehicle, or between the adaptor and the vehicle;
- reading the information stored on the electronic tag in the seal by means of the reader; and
- wirelessly sending the data read from the electronic tag to the database, identifying the seal in the database, and updating the status of the seal in the system to the value 'removed'.

In a preferred embodiment,

### Brief description of drawings

The invention is now described, by way of example, with reference to the accompanying drawings, in which:
Fig. 1 shows a perspective view of a tachograph system;
Fig. 2 shows a schematic view a sealed connection between a motion sensor and a gearbox in a vehicle;
Fig. 3 shows a perspective view of a rotating seal according to a standardised format;
Fig. 4 shows a schematic view of a system according to the present invention; and
Fig. 5 shows a schematic view of a proposed hierarchy allowing traceability of seals.

### Description of embodiments

In the following, a detailed description of an apparatus, method, and system for controlling ignition of a vehicle is provided.

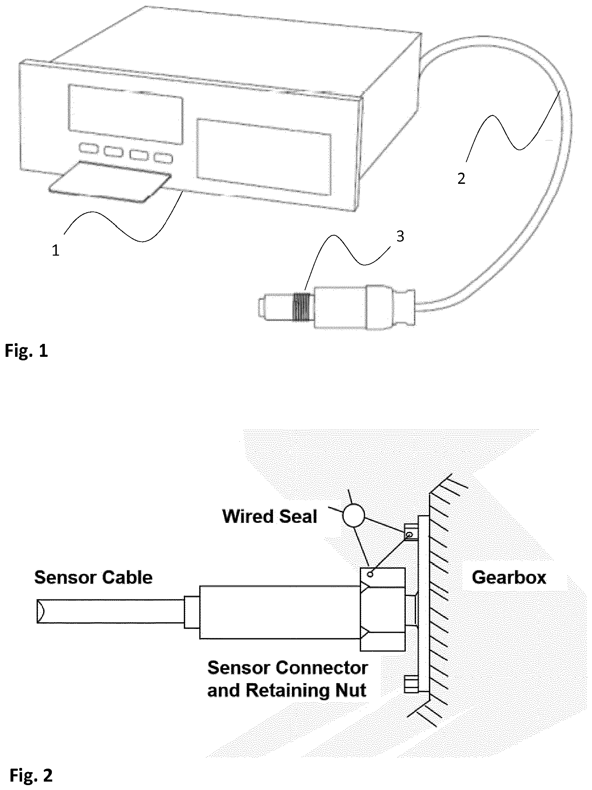

Fig. 1 illustrates a perspective view of a tachograph system 1, for measuring, processing, storing, or reporting collected vehicle data. The outer design and form factor of the tachograph 1 complies with standards in the field of tachographs such as e.g. ISO 7736. The tachograph 1 comprises a motion sensor 3 connected to the tachograph 1 by means of a sensor cable 2.

In Fig. 2, the connection between the motion sensor 3 and the gearbox is illustrated. A sensor connector and retaining nut is shown for attaching the motion sensor 3 to the gearbox. After properly fitting the motion sensor 3, a wired seal is applied between a fixed point on the gearbox and the motion sensor 3, for instance on the retaining nut, in such a way that any attempt to manipulate or tamper with the motion sensor 3 is immediately evident. The wire should be pulled sufficiently taut such that the retaining nut may not be rotated without breaking the seal.

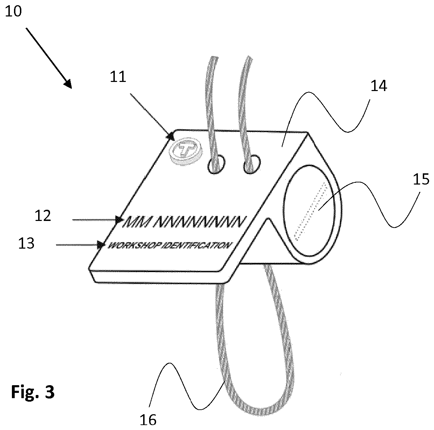

Fig. 3 illustrates an example of a seal 10 which fulfils the requirements of European standard EN 16882:2016. To this end, the seal 10 comprises a main body 14 with a pair of through going holes for accommodating two ends of a wire 16 and a rotating element 15 which forms an internal locking mechanism that permits rotation within the main body 14 in one direction only to engage and retain the two ends of the wire 16. If the rotating element 15 rotated in the opposite direction after fitting of the seal 10, the rotating element 15 and/or the main body 14 shall break irreversibly before opening of the seal 10 in order to show evidence of tampering.

Furthermore, as discussed in the introductory portion in accordance with Regulation (EU) 165/2014 and Commission Implementing Regulation (EU) 2016/799, the seal 10 has been marked with a unique identification serial number 12 consisting of alpha-numeric digits MM NNNNNN, wherein MM represents a unique manufacturer identification (to be stored in a database managed by the European Commission), and NNNNNN represents the unique serial number of the seal 10 in the domain of the seals manufacturer. Additionally, the seal also carries a special mark 13 representing a unique identifier (UID) of the approved fitter, workshop or vehicle manufacturer that may fit/has fitted the seal 10 in a vehicle. Finally, the seal 10 also has a three-dimensional logo seal 11, representing a classification mark for the category seal, here a "T" logo, embossed or positively moulded on the surface.

In accordance with the general inventive concept of the present invention, the seal 10 also comprises an electronic tag (not shown) having data associated with the seal 10 stored thereon. This data comprises at least the unique seal identification number 12, but may also comprise the UID 13 of the approved fitter, workshop, or vehicle manufacturer. The electronic tag may be an RFID tag, an NFC tag or any other suitable tag which enables wireless interrogation and reading of data from the electronic tag as known in the art.

In one embodiment of the present invention, the electronic tag may be arranged in a frangible portion of the seal 10, for instance in the rotating element 15. The electronic tag is then arranged such that when the seal 10 is broken, the electronic tag will also be broken and rendered incapable of being wirelessly interrogated.

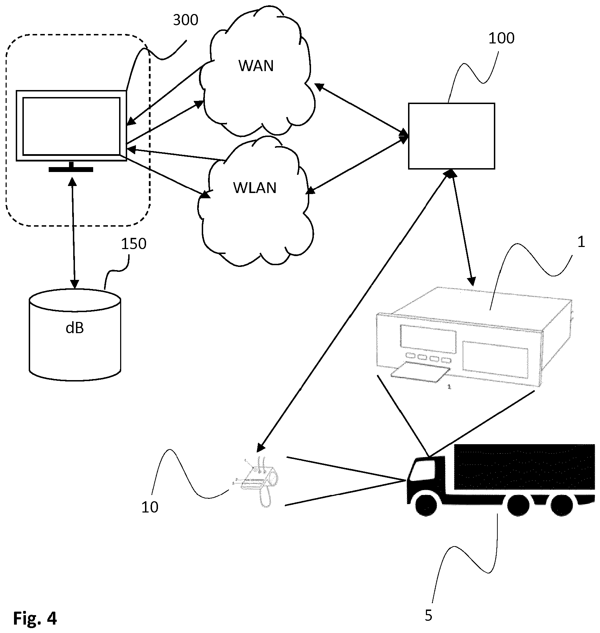

Turning now to Fig. 4, a system for managing seals for tachographs in vehicles according to the present invention is illustrated. The system comprises a seal 10 as described in connection with Fig. 3 having an electronic tag with data associated with the seal 10 stored thereon. The seal 10 is adapted to be fitted between the motion sensor 3 and the gearbox as shown in Figs. 1 and 2 when the tachograph 1 is installed and calibrated in vehicle 5. Alternatively, in the case of vehicles, e.g. M1 or N1 type vehicles exempt from tachograph use, that cannot be fitted with a tachograph gearbox motion sensor directly, a mechanical adaptor or M1N1 adaptor may be installed to record speed/distance pulses generated by the vehicle. In such vehicles, the seal 10 may be fitted between the adaptor (not shown) and the vehicle 5, e.g. the vehicle chassis.

The system also comprises a reader unit 100 which is adapted to transmit interrogating signals (radio waves) of a predetermined frequency to activate the electronic tag in the seal 10. The radio energy transmitted by the reader 100 provides power to the electronic tag, which sends out an authentication reply and transmits the data stored in the electronic tag to the reader 100. Further, the reader 100 also comprises means for wirelessly communicating with the tachograph 1 in the vehicle 5 as well as with a database 150, either directly or via an external server 300 over a Wide Area Network (WAN), such as Internet or a private WAN, or a wireless Local Area Network (WLAN), as known in the art.

A method of managing seals for tachographs in vehicles using such a system will now be explained. Considering a first situation, wherein an approved fitter, workshop, or vehicle manufacturer receives a batch of seals 10 from a certified seals manufacturer. To comply with the requirements of traceability, the approved fitter, workshop, or vehicle manufacturer must keep records of the seals 10 in its possession. By using the system of the present invention, the approved fitter, workshop, or vehicle manufacturer may then wirelessly read the data associated with each seal 10 from their respective electronic tags by means of the reader and provide this data, including the unique seal identification number 12, and as the case may be also the UID 13 of the approved fitter, workshop, or vehicle manufacturer, to the database 150 to be stored therein. At the same time, a status value for each seal 10 in the system may be updated to keep track of the seals 10. For instance, seals 10 received from a seals manufacturer, but not yet mounted in vehicles may be registered as 'on stock' in the database 150.

Subsequently, when the approved fitter, workshop, or vehicle manufacturer installs and calibrates a tachograph 1 in a vehicle 5, a seal 10 is fitted as explained above to complete the installation. The data on the electronic tag is then read wirelessly using the reader 100, and communicated wirelessly to the tachograph 1 to be stored in an internal memory therein to comply with the legislation. At the same time, the data from the electronic tag of the seal 10 is wirelessly transmitted to the database 150 and the database entry associated with the seal 10 is updated to include the vehicle identification number (VIN) of the vehicle 5, and the status value is changed from 'on stock' to 'fitted in vehicle'. The VIN may be for instance be retrieved wirelessly from the tachograph 1, entered manually or in any other suitable way.

The data read from the electronic tag, including the unique seal identification number 12, the UID 13 and the VIN of the vehicle 5 may then be transmitted wirelessly from the reader 100 to a printer, which then prints an installation plaque (not shown) to be affixed in the vehicle 5, preferably on the tachograph 1, the 'B' pillar, or the doorframe on the driver's side of the vehicle 5.

During service and routine inspections of the vehicle, it may be found that a seal 10 has been broken or shows evidence of tampering. The system according to the invention may then be used to wirelessly read the data from the electronic tag in the seal 10 using the reader 100, wirelessly transmit the data to the database 150 and identify the associated database entry. Thereafter, the status value of the seal 10 is changed from 'fitted in vehicle' to 'broken'.

Inspections may also reveal that a tachograph 1 requires adjustment or repair. In such a case, the seal 10 may be removed to access the connection between the motion sensor 3 and the gearbox, or between the adapter and the vehicle. The system according to the present invention may then be used to wirelessly read the data from the electronic tag in the seal 10 using the reader 100, wirelessly transmit the data to the database 150 and identify the associated database entry. Thereafter, the status value of the seal 10 is changed from 'fitted in vehicle' to 'removed'.

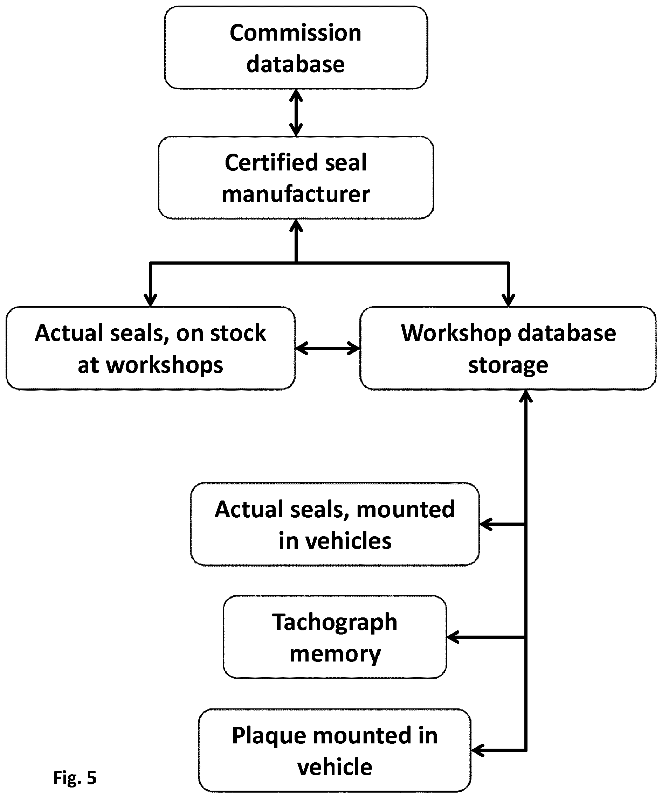

In Fig. 5, a possible hierarchy for traceability of seals is illustrated. Certified seals manufacturers are registered in a dedicated database, which may be managed by the European Commission. Seals from certified seals manufacturers are distributed to approved fitters, workshops, or vehicle manufacturers, which maintain local workshop databases containing data concerning seals they have on stock, as well as seals mounted in vehicles. The data pertaining to the seals is also stored in the tachographs and printed on the installation plaques in the respective vehicles.

## Claims

1. A system for managing seals for tachographs in vehicles, the system comprising:
- a tachograph (1) comprising a motion sensor (3) adapted to be connected to a gearbox of a vehicle (5), or an adaptor, to provide a signal representative of vehicle speed and/or distance travelled;
- at least one seal (10) arranged for single use, and adapted to be fitted between the motion sensor (3) and the gearbox, or between the adaptor and the vehicle (5), in such a way as to show visual evidence of any attempt to tamper with the seal (10), wherein each seal (10) is marked with a unique seal identification number (12) and comprises a readable electronic tag containing data including the seal identification number (12) stored thereon;
- a reader (100) arranged to communicate wirelessly with the electronic tag of the seal (10) to read the data stored thereon; and
- a database (150) adapted to store data associated with each seal (10),
wherein the reader (100) is further arranged to
- communicate wirelessly with the tachograph (1) to provide the data read from the electronic tag to be stored in an internal memory of the tachograph (1), and
- communicate wirelessly with the database (150) to provide the data read from the electronic tag to be stored in the database (150).

2. The system according to claim 1, wherein the data stored on the electronic tag and/or the data associated with each seal (10) to be stored in the database (150) comprises the seal identification number (12), a unique identifier (UID) (13) associated with the fitter or workshop or vehicle manufacturer that may fit the seal (10) in a vehicle (5), a status of the seal (10) in the system, and/or a vehicle identification number (VIN) of the vehicle (5) in which the seal (10) is fitted.

3. The system according to claim 2, wherein the status of the seal (10) in the system is chosen from any of the values comprising 'in stock', 'fitted in vehicle', 'broken' and 'removed'.

4. The system according to any one of the preceding claims, wherein the electronic tag is an RFID tag, an NFC tag or any tag which enables wireless interrogation and reading of data from the electronic tag to the reader (100).

5. The system according to any one of the preceding claims, wherein the electronic tag is arranged in a frangible portion (15) of the seal (10) such that the electronic tag is broken if the seal (10) is broken.

6. A method performed in a system for managing seals for tachographs in vehicles according to any one of the preceding claims, wherein the method comprises the steps of:
- reading the information stored on the electronic tag in the seal (10) by means of the reader (100); and
- wirelessly sending the data read from the electronic tag to the database (150), storing the data in the database (150), and updating a status of the seal in the system.

7. The method according to the preceding claim, wherein the data stored on the electronic tag and/or the data associated with each seal (10) to be stored in the database (150) comprises the seal identification number (12), a unique identifier (UID) (13) associated with the fitter or workshop or vehicle manufacturer that may fit the seal (10) in a vehicle (5), a status of the seal (10) in the system, and/or a vehicle identification number (VIN) of the vehicle (5) in which the seal (10) is fitted.

8. The method according to the preceding claim, wherein the status of the seal (10) in the system is recorded as any of the values chosen from 'in stock', 'fitted in vehicle', 'broken', and 'removed'.

9. The method according to any one of claims 6-8, wherein the method further comprises the steps of:
- fitting the seal (10) between the motion sensor (3) (3) and the gearbox in a vehicle (5), or between the adaptor and the vehicle (5), in such a way as to show visual evidence of any attempt to tamper with the seal (10);
- reading the information stored on the electronic tag in the seal (10) by means of the reader (100);
- wirelessly sending the data read from the electronic tag to the tachograph (1) and storing the data in an internal memory of the tachograph (1);
- wirelessly sending the data read from the electronic tag along with the vehicle (5) identification number (VIN) of the vehicle (5) and the unique identifier (UID) (13) associated with the fitter or workshop or vehicle manufacturer that may fit the seal (10) in a vehicle (5) to the database (150), storing the data, the VIN and the UID (13) in the database (150), and updating the status of the seal (10) in the system to the value 'fitted in vehicle'.

10. The method according to claim 9, wherein the method further comprises the steps of:
- sending the data read from the electronic tag, the VIN, and the UID (13) to a printer; and
- printing an installation plaque comprising the seal (10) identification number, the VIN and the UID (13) to be affixed on the tachograph (1) and/or the B pillar or doorframe of the vehicle (5).

11. The method according to any one of claims 6-10, wherein the method further comprises the steps of:
- detecting that a seal (10) fitted between the motion sensor (3) and the gearbox in a vehicle (5), or between the adaptor and the vehicle (5), shows visual evidence of an attempt to tamper with the seal (10);
- reading the information stored on the electronic tag in the seal (10) by means of the reader (100); and
- wirelessly sending the data read from the electronic tag to the database (150), identifying the seal (10) in the database (150), and updating the status of the seal (10) in the system to the value 'broken'.

12. The method according to any one of claims 6-11, wherein the method further comprises the steps of:
- removing a seal (10) fitted between the motion sensor (3) and the gearbox in a vehicle (5), or between the adaptor and the vehicle (5);
- reading the information stored on the electronic tag in the seal (10) by means of the reader (100); and
- wirelessly sending the data read from the electronic tag to the database (150), identifying the seal (10) in the database (150), and updating the status of the seal (10) in the system to the value 'removed'.

## Patentansprüche

1. System zum Verwalten von Siegeln für Tachographen in Fahrzeugen, wobei das System Folgendes umfasst:
- einen Tachographen (1), der einen Bewegungsmelder (3), der angepasst ist, um mit einem Getriebe eins Fahrzeugs (5), oder einem Adapter, verbunden zu werden, um ein Signal bereitzustellen, das für Fahrzeuggeschwindigkeit und/oder zurückgelegte Strecke darstellend ist;
- mindestens ein Siegel (10), das für eine einmalige Verwendung angeordnet ist und angepasst ist, um zwischen dem Bewegungsmelder (3) und dem Getriebe oder zwischen dem Adapter und dem Fahrzeug (5) auf eine solche Weise eingesetzt zu werden, dass es visuellen Beweis für einen Versuch, das Siegel (10) zu manipulieren zeigt, wobei jedes Siegel (10) mit einer eindeutigen Siegelidentifikationsnummer (12) gekennzeichnet ist und ein lesbares elektronisches Etikett umfasst, das Daten enthält, die darin gespeicherte Siegelidentifikationsnummer (12) einschließen;
- ein Lesegerät (100), das angeordnet ist, um drahtlos mit dem elektronischen Etikett des Siegels (10) zu kommunizieren, um die darauf gespeicherten Daten auszulesen; und
- eine Datenbank (150), die angepasst ist, um Daten zu speichern, die mit jedem Siegel (10) in Verbindung stehen,
wobei das Lesegerät (100) weiter angeordnet ist um
- drahtlos mit dem Tachographen (1) zu kommunizieren, um die aus dem elektronischen Etikett ausgelesenen Daten bereitzustellen, um sie in einem internen Speicher des Tachographen (1) zu speichern, und
- drahtlos mit der Datenbank (150) zu kommunizieren, um die aus dem elektronischen Etikett ausgelesenen Daten bereitzustellen, um sie in der Datenbank (150) zu speichern.

2. System nach Anspruch 1, wobei die auf dem elektronischen Etikett gespeicherten Daten und/oder die mit jedem Siegel (10) verknüpfte Daten, die in der Datenbank (150) gespeichert werden sollen, die Siegelidentifikationsnummer (12), einen eindeutigen Bezeichner (UID) (13), der mit dem Installateur oder der Werkstatt oder dem Fahrzeughersteller, der das Siegel (10) in einem Fahrzeug (5) einsetzen darf, verknüpft ist, einen Status des Siegels (10) in dem System und/oder eine Fahrzeugidentifikationsnummer (VIN) des Fahrzeugs (5), in dem das Siegel (10) eingesetzt ist, umfassen.

3. System nach Anspruch 2, wobei der Status des Siegels (10) in dem System ausgewählt ist aus einem der Werte umfassend "im Bestand", "im Fahrzeug eingesetzt", "aufgebrochen" und "entfernt".

4. System nach einem der vorstehenden Ansprüche, wobei das elektronische Etikett ein RFID-Etikett, ein NFC-Etikett oder ein Etikett ist, das dem Lesegerät (100) drahtloses Abfragen und Auslesen von Daten aus dem elektronischen Etikett ermöglicht.

5. System nach einem der vorstehenden Ansprüche, wobei das elektronische Etikett in einem zerbrechlichen Abschnitt (15) des Siegels (10) so angeordnet ist, dass das elektronische Etikett aufgebrochen wird, wenn das Siegel (10) aufgebrochen wird.

6. Verfahren durchgeführt in einem System zum Verwalten von Siegeln für Tachographen in Fahrzeugen nach einem der vorstehenden Ansprüche, wobei das Verfahren folgende Schritte umfasst:
- Auslesen der auf dem elektronischen Etikett in dem Siegel (10) gespeicherten Informationen anhand des Lesegeräts (100); und
- drahtloses Senden der aus dem elektronischen Etikett ausgelesenen Daten an die Datenbank (150), Speichern der Daten in der Datenbank (150) und Aktualisieren eines Status des Siegels im System.

7. Verfahren nach dem vorstehenden Anspruch, wobei die auf dem elektronischen Etikett gespeicherten Daten und/oder die mit jedem Siegel (10) verknüpfte Daten, die in der Datenbank (150) gespeichert werden sollen, die Siegelidentifikationsnummer (12), einen eindeutigen Bezeichner (UID) (13), der mit dem Installateur oder der Werkstatt oder dem Fahrzeughersteller, der das Siegel (10) in einem Fahrzeug (5) einsetzt, einen Status des Siegels (10) in dem System und/oder eine Fahrzeugidentifikationsnummer (VIN) des Fahrzeugs (5), in dem das Siegel (10) eingesetzt ist, umfassen.

8. Verfahren nach dem vorstehenden Anspruch, wobei der Status des Siegels (10) in dem System eingetragen ist als einer der Werte ausgewählt aus "im Bestand", "im Fahrzeug eingesetzt", "aufgebrochen" und "entfernt".

9. Verfahren nach einem der Ansprüche 6 - 8, wobei das Verfahren weiter folgende Schritte umfasst:
- Einsetzen des Siegels (10) zwischen dem Bewegungsmelder (3) (3) und dem Getriebe in einem Fahrzeug (5) oder zwischen dem Adapter und dem Fahrzeug (5) auf eine solche Weise, dass es visuellen Beweis für einen Versuch, das Siegel (10) zu manipulieren zeigt;
- Auslesen der auf dem elektronischen Etikett im Siegel (10) gespeicherten Informationen anhand des Lesegeräts (100);
- drahtloses Senden der aus dem elektronischen Etikett ausgelesenen Daten an den Tachographen (1) und Speichern der Daten in einem internen Speicher des Tachographen (1);
- drahtloses Senden der aus dem elektronischen Etikett ausgelesenen Daten zusammen mit der Fahrzeug-(5)-Identifikationsnummer (VIN) des Fahrzeugs (5) und dem eindeutigen Bezeichner (UID) (13), der mit dem Installateur oder der Werkstatt oder dem Fahrzeughersteller, der das Siegel (10) in einem Fahrzeug (5) eingesetzt hat, verknüpft ist, an die Datenbank (150), Speichern der Daten, der VIN und des UID (13) in der Datenbank (150) und Aktualisieren des Status des Siegels (10) in dem System auf den Wert "im Fahrzeug eingesetzt".

10. Verfahren nach Anspruch 9, wobei das Verfahren weiter folgende Schritte umfasst:
- Senden der aus dem elektronischen Etikett ausgelesenen Daten, der VIN und des UID (13) an einen Drucker; und
- Ausdrucken einer Installationsplakette, die die Identifikationsnummer des Siegels (10), die VIN und den UID (13) umfasst, um auf dem Tachographen (1) und/oder an der B-Säule oder dem Türrahmen des Fahrzeugs (5) befestigt zu werden.

11. Verfahren nach einem der Ansprüche 6 - 10, wobei das Verfahren weiter folgende Schritte umfasst:
- Erkennen, dass ein Siegel (10), das zwischen dem Bewegungsmelder (3) und dem Getriebe in einem Fahrzeug (5) oder zwischen dem Adapter und dem Fahrzeug (5) eingesetzt ist, visuellen Beweis eines Versuchs, das Siegel (10) zu manipulieren zeigt;
- Auslesen der auf dem elektronischen Etikett in dem Siegel (10) gespeicherten Informationen anhand des Lesegeräts (100); und
- drahtloses Senden der aus dem elektronischen Etikett ausgelesenen Daten an die Datenbank (150), Identifizieren des Siegels (10) in der Datenbank (150) und Aktualisieren des Status des Siegels (10) in dem System auf den Wert "aufgebrochen".

12. Verfahren nach einem der Ansprüche 6 - 11, wobei das Verfahren weiter folgende Schritte umfasst:
- Entfernen eines Siegels (10), das zwischen dem Bewegungsmelder (3) und dem Getriebe in einem Fahrzeug (5) oder zwischen dem Adapter und dem Fahrzeug (5) eingesetzt ist;
- Auslesen der auf dem elektronischen Etikett in dem Siegel (10) gespeicherten Informationen anhand des Lesegeräts (100); und
- drahtloses Senden der aus dem elektronischen Etikett ausgelesenen Daten an die Datenbank (150), Identifizieren des Siegels (10) in der Datenbank (150) und Aktualisieren des Status des Siegels (10) in dem System auf den Wert "entfernt".

## Revendications

1. Système de gestion de sceaux pour des tachygraphes dans des véhicules, le système comprenant :
- un tachygraphe (1) comprenant un capteur de mouvement (3) adapté pour être connecté à une boîte de vitesses d'un véhicule (5), ou un adaptateur, pour fournir un signal représentatif d'une vitesse de véhicule et/ou d'une distance parcourue ;
- au moins un sceau (10) agencé pour un usage unique, et adapté pour être installé entre le capteur de mouvement (3) et la boîte de vitesses, ou entre l'adaptateur et le véhicule (5), de manière à montrer une preuve visuelle d'une quelconque tentative d'effraction du sceau (10), dans lequel chaque sceau (10) est marqué d'un numéro d'identification de sceau unique (12) et comprend une étiquette électronique lisible contenant des données incluant le numéro d'identification de sceau (12) stockées sur celle-ci ;
- un lecteur (100) agencé pour communiquer sans fil avec l'étiquette électronique du sceau (10) pour lire les données stockées sur celle-ci ; et
- une base de données (150) adaptée pour stocker des données associées à chaque sceau (10),
dans lequel le lecteur (100) est en outre agencé pour
- communiquer sans fil avec le tachygraphe (1) pour fournir les données lues à partir de l'étiquette électronique à stocker dans une mémoire interne du tachygraphe (1), et
- communiquer sans fil avec la base de données (150) pour fournir les données lues à partir de l'étiquette électronique à stocker dans la base de données (150).

2. Système selon la revendication 1, dans lequel les données stockées sur l'étiquette électronique et/ou les données associées à chaque sceau (10) à stocker dans la base de données (150) comprennent le numéro d'identification de sceau (12), un identifiant unique (UID) (13) associé à l'installateur ou à l'atelier ou au constructeur automobile qui peut installer le sceau (10) dans un véhicule (5), un état du sceau (10) dans le système et/ou un numéro d'identification de véhicule (VIN) du véhicule (5) dans lequel le sceau (10) est installé.

3. Système selon la revendication 2, dans lequel l'état du sceau (10) dans le système est choisi à partir de l'une quelconque des valeurs comprenant « en stock », « installé dans le véhicule », « rompu » et « retiré ».

4. Système selon l'une quelconque des revendications précédentes, dans lequel l'étiquette électronique est une étiquette RFID, une étiquette NFC ou une quelconque étiquette qui permet une interrogation et une lecture sans fil des données à partir de l'étiquette électronique sur le lecteur (100).

5. Système selon l'une quelconque des revendications précédentes, dans lequel l'étiquette électronique est agencée dans une partie frangible (15) du sceau (10) de telle sorte que l'étiquette électronique est rompue si le sceau (10) est rompu.

6. Procédé exécuté dans un système de gestion de sceaux pour des tachygraphes dans des véhicules selon l'une quelconque des revendications précédentes, dans lequel le procédé comprend les étapes consistant à :
- lire les informations stockées sur l'étiquette électronique dans le sceau (10) au moyen du lecteur (100) ; et
- envoyer sans fil les données lues à partir de l'étiquette électronique à la base de données (150), stocker les données dans la base de données (150), et mettre à jour un état du sceau dans le système.

7. Procédé selon la revendication précédente, dans lequel les données stockées sur l'étiquette électronique et/ou les données associées à chaque sceau (10) à stocker dans la base de données (150) comprennent le numéro d'identification de sceau (12), un identifiant (UID) (13) associé à l'installateur ou à l'atelier ou au constructeur automobile qui peut installer le sceau (10) dans un véhicule (5), un état du sceau (10) dans le système, et/ou un numéro d'identification de véhicule (VIN) du véhicule (5) dans lequel le sceau (10) est installé.

8. Procédé selon la revendication précédente, dans lequel l'état du sceau (10) dans le système est enregistré comme l'une quelconque des valeurs choisies parmi « en stock », « installé dans le véhicule », « rompu » et « retiré ».

9. Procédé selon l'une quelconque des revendications 6-8, dans lequel le procédé comprend en outre les étapes consistant à :
- installer le sceau (10) entre le capteur de mouvement (3) (3) et la boîte de vitesses dans un véhicule (5), ou entre l'adaptateur et le véhicule (5), de manière à montrer une preuve visuelle d'une quelconque tentative d'effraction du sceau (10) ;
- lire les informations stockées sur l'étiquette électronique dans le sceau (10) au moyen du lecteur (100) ;
- envoyer sans fil les données lues à partir de l'étiquette électronique vers le tachygraphe (1) et stocker les données dans une mémoire interne du tachygraphe (1) ;
- envoyer sans fil les données lues à partir de l'étiquette électronique avec le numéro d'identification (VIN) de véhicule (5) du véhicule (5) et l'identifiant unique (UID) (13) associé à l'installateur ou à l'atelier ou au constructeur du véhicule qui peut installer le sceau (10) dans un véhicule (5) à la base de données (150), stocker les données, le VIN et l'UID (13) dans la base de données (150), et mettre à jour l'état du sceau (10) dans le système pour la valeur « installé dans le véhicule ».

10. Procédé selon la revendication 9, dans lequel le procédé comprend en outre les étapes consistant à :
- envoyer les données lues à partir de l'étiquette électronique, le VIN, et l'UID (13) à une imprimante ; et
- imprimer une plaque d'installation comprenant le numéro d'identification du sceau (10), le VIN et l'UID (13) à apposer sur le tachygraphe (1) et/ou la colonne B ou l'encadrement de porte du véhicule (5).

11. Procédé selon l'une quelconque des revendications 6-10, dans lequel le procédé comprend en outre les étapes consistant à :
- détecter qu'un sceau (10) installé entre le capteur de mouvement (3) et la boîte de vitesses dans un véhicule (5), ou entre l'adaptateur et le véhicule (5), montre une preuve visuelle d'une tentative d'effraction du sceau (10) ;
- lire les informations stockées sur l'étiquette électronique dans le sceau (10) au moyen du lecteur (100) ; et
- envoyer sans fil les données lues à partir de l'étiquette électronique à la base de données (150), identifier le sceau (10) dans la base de données (150), et mettre à jour l'état du sceau (10) dans le système à la valeur « rompu ».

12. Procédé selon l'une quelconque des revendications 6-11, dans lequel le procédé comprend en outre les étapes consistant à :
- retirer un sceau (10) installé entre le capteur de mouvement (3) et la boîte de vitesses dans un véhicule (5), ou entre l'adaptateur et le véhicule (5) ;
- lire les informations stockées sur l'étiquette électronique dans le sceau (10) au moyen du lecteur (100) ; et
- envoyer sans fil les données lues à partir de l'étiquette électronique à la base de données (150), identifier le sceau (10) dans la base de données (150), et mettre à jour l'état du sceau (10) dans le système à la valeur « retiré ».
